(19) Europäisches Patentamt
European Patent Office
Office européen des brevets

(11) **EP 4 693 454 A1**

(12) **EUROPEAN PATENT APPLICATION**
published in accordance with Art. 153(4) EPC

(43) Date of publication:
**11.02.2026 Bulletin 2026/07**

(21) Application number: **24904360.5**

(22) Date of filing: **11.12.2024**

(51) International Patent Classification (IPC):
**H01M 4/139** (2010.01)   **H01M 4/04** (2006.01)
**H01M 10/052** (2010.01)   **B32B 7/025** (2019.01)
**B32B 7/06** (2019.01)   **H01B 5/14** (2006.01)

(52) Cooperative Patent Classification (CPC):
**H01M 4/13; H01M 4/0428; H01M 4/134;
H01M 4/1395; H01M 4/366; H01M 4/382;
H01M 10/0525; H01M 10/4235;** H01M 2004/027;
Y02E 60/10

(86) International application number:
**PCT/KR2024/096664**

(87) International publication number:
**WO 2025/127795 (19.06.2025 Gazette 2025/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023   KR 20230183303
10.12.2024   KR 20240182140**

(71) Applicants:
• **LG Energy Solution, Ltd.
Seoul 07335 (KR)**
• **Toray Advanced Materials Korea Inc.
Gumi-si, Gyeongsangbuk-do 39389 (KR)**

(72) Inventors:
• **JOO, Mun Kyu
Daejeon 34122 (KR)**

• **LEE, Ilha
Daejeon 34122 (KR)**
• **KOO, Daeryung
Daejeon 34122 (KR)**
• **KWON, Yohan
Daejeon 34122 (KR)**
• **CHAE, Jonghyun
Daejeon 34122 (KR)**
• **HONG, Doyoung
Daejeon 34122 (KR)**
• **PARK, Jongyong
Gumi-si, Gyeongsangbuk-do 39389 (KR)**
• **LEE, Seungwoo
Gumi-si, Gyeongsangbuk-do 39389 (KR)**
• **LEE, Junghwan
Gumi-si, Gyeongsangbuk-do 39389 (KR)**

(74) Representative: **Hoffmann Eitle
Patent- und Rechtsanwälte PartmbB
Arabellastraße 30
81925 München (DE)**

(54) **LITHIUM TRANSFER FILM AND MANUFACTURING METHOD THEREOF, ELECTRODE FOR LITHIUM SECONDARY BATTERY TO WHICH LITHIUM TRANSFER FILM IS TRANSFERRED, AND LITHIUM SECONDARY BATTERY COMPRISING SAME**

(57)    The present invention relates to a lithium transfer film includes a base layer, a lithium metal layer, and a passivation layer, wherein the base layer, a Young's Modulus in each of a machine direction (MD) and a transverse direction (TD) is 4.2 GPa or more, an elongation in each of the MD and TD is 130% or less, and an elongation deviation in the MD and TD is $\pm 3.5$ or less, a method for preparing the same, an electrode for a lithium secondary battery transferred with the lithium transfer film, and a lithium secondary battery including the same.

[Figure 1]

**EP 4 693 454 A1**

## Description

[Technical Field]

The present invention claims priority to and the benefit of Korean Patent Application Nos. 10-2023-0183303 and 10-2024-0182140 filed in the Korean Intellectual Property Office on December 15, 2023 and December 10, 2024, respectively, the entire contents of which are incorporated herein by reference.

The present disclosure relates to a lithium transfer film and a method for preparing the same, an electrode for a lithium secondary battery transferred with the lithium transfer film, and a lithium secondary battery including the same.

[Background Art]

The demand for the use of alternative energy or clean energy is increasing due to the rapid increase in the use of fossil fuels. As a result, the fields of power generation and power storage using electrochemical reactions are actively being studied.

At present, a representative example of an electrochemical device using such electrochemical energy may be a secondary battery, and its application area is gradually expanding.

Meanwhile, as the technical development and demand for mobile devices increase, the demand for secondary batteries as an energy source is rapidly increasing. Among these secondary batteries, lithium secondary batteries having a high energy density and a high voltage, a long cycle life, and a low self-discharge rate, have been commercialized and widely used. Meanwhile, as the utilization range of the lithium secondary batteries is expanded to large-capacity devices such as electric vehicles, research on a high-capacity lithium secondary battery is also actively being conducted. Also, studies are being actively conducted on methods for manufacturing a high-density electrode having a higher energy density per unit volume which is used as an electrode for the high-capacity lithium secondary battery, and the trend of studies is to gradually increase loading so as to improve the energy density.

[Related Art Document]

[Patent Document]

(Patent Document 1) Korean Patent No. 10-2475886

[Detailed Description of the Invention]

[Technical Problem]

The present disclosure provides a lithium transfer film and a manufacturing method thereof, an electrode for a lithium secondary battery transferred with the lithium transfer film and a lithium secondary battery including the same, in which a passivation layer can suppress lithium loss which may occur during a lithium transfer process, and mechanical properties of a base layer are improved so as to suppress or prevent the damage to the passivation layer during the transfer process.

[Technical Solution]

One embodiment of the present disclosure provides a lithium transfer film including: a base layer; a lithium metal layer; and a passivation layer, wherein in the base layer, a Young's Modulus in each of a machine direction (MD) and a transverse direction (TD) is 4.2 GPa or more, an elongation in each of the MD and TD is 130% or less, and an elongation deviation in the MD and TD is ±3.5 or less.

One embodiment of the present disclosure provides a method of manufacturing a lithium transfer film, wherein the method includes: depositing a lithium metal layer on one surface of a base layer; and forming a passivation layer on a surface of the lithium metal layer opposite to a surface where the base layer is located, wherein in the base layer, a Young's Modulus in each of a MD and a TD is 4.2 GPa or more, an elongation in each of the MD and TD is 130% or less, and an elongation deviation in the MD and TD is ±3.5 or less.

One embodiment of the present disclosure provides an electrode intermediate in which an electrode current collector layer, an electrode active material layer, and a lithium transfer film, are sequentially stacked, wherein the passivation layer of the lithium transfer film faces the electrode active material layer.

One embodiment of the present disclosure provides an electrode intermediate in which an electrode current collector layer, and a lithium transfer film are sequentially stacked, wherein the passivation layer of the lithium transfer film faces the electrode current collector layer.

One embodiment of the present disclosure provides an electrode for a lithium secondary battery including an electrode active material layer or an electrode current collector layer, wherein at least one surface of the electrode active material layer or the electrode current collector layer is transferred with the above-described lithium transfer film.

Another embodiment of the present disclosure provides a lithium secondary battery including the above-described electrode for the lithium secondary battery, a separator; and an electrolyte.

Another embodiment of the present disclosure provides a battery module or a battery pack including the above-described lithium secondary battery.

Finally, another embodiment of the present disclosure provides a battery pack including the above-described battery module.

[Advantageous Effects]

The present disclosure provides a lithium transfer film and a manufacturing method thereof, an electrode for a lithium secondary battery transferred with the lithium transfer film and a lithium secondary battery including the same. The lithium transfer film is characterized in that a passivation layer suppresses side reactions caused by lithium oxide or nitride that may occur on the surface of the lithium transfer film during a lithium transfer process, thereby reducing the lithium loss and the risk of ignition. As a result, certain mechanical properties of a base layer are satisfied so as to suppress or prevent such a passivation layer from being damaged by tension applied during roll-to-roll processing.

[Brief Description of Drawings]

The following drawings attached hereto exemplify embodiments of the present disclosure and serve to help further understanding of the technical idea of the present disclosure together with the detailed description of the disclosure to be described later. Therefore, the present disclosure should not be construed as being limited to the matters illustrated in the drawings.

FIG. 1 is a view illustrating a stacked structure of a lithium transfer film according to one embodiment of the present disclosure;

FIG. 2 is a flowchart illustrating a manufacturing method of the lithium transfer film according to one embodiment of the present disclosure;

FIG. 3 is a view illustrating a stacked structure of a prelithiated negative electrode manufactured according to one embodiment of the present disclosure; and

FIG. 4 is a view illustrating a stacked structure of a lithium secondary battery manufactured according to one embodiment of the present disclosure.

[Best Mode]

Before the explanation of the present disclosure, first, some terms are defined.

In the present disclosure, when it is said that a certain part "includes" a certain component, this means that the certain part may further include other components rather than excluding other components unless specifically stated to the contrary.

In the present disclosure, 'p to q' means the range of 'p or more and q or less'.

In the present disclosure, the "specific surface area" is measured by a BET(Brunauer, Emmett, Teller) method, and is calculated from a nitrogen gas adsorption amount by using, for example, BELSORP-mini II of BEL Japan Inc. under a liquid nitrogen temperature (77K). In the present disclosure, the BET specific surface area may mean the specific surface area measured by the above measurement method.

In the present disclosure, "strain" is an amount obtained by dividing the material deformation amount caused by stress occurring in the material, by the original length.

In the present disclosure, "Young's Modulus" is a mechanical property that measures the stiffness of a solid material, and is a coefficient of elasticity that defines the relationship between the stress (the force per unit area) and the strain of a linear elastic material in a uniaxial deformation region, and can be used as the same concept as the elastic modulus. This is expressed by an equation as in the following equation 1. A low Young's Modulus means a high strain, and a high Young's Modulus means a low strain.

[Equation 1]

$$E = \frac{\sigma}{\epsilon}$$

In the above equation 1,
E stands for Young's Modulus, σ stands for stress, and ε stands for strain.

In the present disclosure, "elongation" is a maximum extension length when a material is broken by a tensile load (Stress), and is expressed in %. This can be used in the same concept as the strain, and a high elongation means that the material has a high ductility.

In the present disclosure, after a film as a measurement target is cut or punched into a sample shape of approximately 25.4 mm x 250 mm, and on the collected sample, the Young's Modulus and the elongation may be measured by a tensile test method of ASTM D882 under, for example, a room temperature condition.

In the present disclosure, the "machine direction (MD)" corresponds to a direction in which a film is advanced in the manufacturing of the film, and may be used in the same concept as a longitudinal direction or a mechanical direction.

In the present disclosure, the "transverse direction (TD)" corresponds to a direction perpendicular to the direction in which the film is advanced in the manufacturing of the film, and may be used in the same concept as a lateral direction.

In the present disclosure, the "deviation of elongation" refers to a difference between the average value of a MD elongation measurement value and a TD elongation measurement value, and the MD elongation measurement value or the TD elongation measurement value. Specifically, this may be calculated by the following [equation 2].

[Equation 2]

elongation  deviation  =  {(MD  elongation)  +  (TD

elongation)}/2 - (MD or TD elongation)

In the present disclosure, "Dn" means a particle size distribution, and refers to a particle diameter at the point of n% in the particle diameter-based cumulative distribution of the number of particles. That is, D50 is a particle diameter (average particle diameter) at the point of 50% in the particle diameter-based cumulative distribution of the number of particles, D90 is a particle diameter at the point of 90% in the particle diameter-based cumulative distribution of the number of particles, and D10 is a particle diameter at the point of 10% in the particle diameter-based cumulative distribution of the number of particles. Meanwhile, the average particle diameter may be measured by using a laser diffraction method. Measurement target powder is dispersed in a dispersion medium, and then is introduced into a commercially available laser diffraction particle size measurement device (e.g., MICROTRAC S3500). Then, when the particles pass through laser beam, the particle size distribution is calculated by measuring the difference in the diffraction pattern according to the particle size.

In one embodiment of the present disclosure, the particle size or the particle diameter may mean the average diameter or the representative diameter of each grain forming metal powder.

Terms or words used in the present disclosure should not be limitedly construed as usual or dictionary meanings, and should be interpreted as meanings and concepts consistent with the technical idea of the present disclosure on the basis of the principle that the inventor can appropriately define the concept of the term in order to explain his/her own invention in the best way.

Singular expressions of terms used in the present disclosure include plural expressions unless the context clearly indicates otherwise.

Terms such as "about", "approximately", and "substantially" used in the present disclosure are used to mean ranges of numerical values or degrees or approximations thereof, considering the inherent manufacturing and material tolerances.

The present disclosure provides a lithium transfer film in which the mechanical properties of a base layer are improved, and thus, damage to a passivation layer may be suppressed or prevented during a transfer process, and a manufacturing method thereof, and an electrode for a lithium secondary battery transferred with the lithium transfer film and a lithium secondary battery including the same.

Hereinafter, embodiments of the present disclosure will be described in detail. However, embodiments of the present disclosure may be modified in various forms, and the scope of the present disclosure is not limited to the embodiments to be described below.

A lithium transfer film, according to one embodiment of the present disclosure includes a base layer, a lithium metal layer, and a passivation layer which are sequentially stacked. In the base layer, the Young's Modulus in each of the MD (machine direction) and the TD (transverse direction) is 4.2GPa or more, the elongation in each of the MD and TD is 130 % or less, and the elongation deviation in the MD and TD is ±3.5 or less.

When a lithium transfer film is transferred to an electrode, a prelithiated electrode may be manufactured. Here, the prelithiation is generally intended to solve a problem in that lithium is consumed in the negative electrode of a lithium secondary battery for forming SEI and various irreversible phases, causing a low initial efficiency during the initial charging of the lithium secondary battery. In this technology, before a battery cell is assembled, lithium corresponding to an amount to be consumed is added to the electrode in advance so as to form irreversible phases(SEI layer, $Li_2O$, and LixSiOy), and thus, the initial efficiency is greatly increased. Also, when the lithium transfer film is transferred to an electrode current collector such as copper foil, a negative electrode of a lithium metal battery may be formed.

After being brought into contact with a transfer target (e.g., an electrode), a lithium transfer film is transferred to one side or both sides of an electrode while pressure is being applied through a roll-to-roll processing. In this manner, the electrode to which lithium is transferred may be continuously produced. Here, in the process of performing lithium transfer by roll-to-roll processing, the lithium transfer film and the electrode as a transfer target are mounted together in the roll-to-roll processing equipment, and then, pulled with a certain tension. When the tension is not applied, wrinkles may occur in the electrode during the lithium transfer process, and misalignment may occur between the lithium transfer film and the electrode. Meanwhile, when the lithium transfer film is pulled with tension, due to low physical properties of the base layer, a problem may occur in which a surface oxide layer for preventing lithium oxidation is broken.

The surface oxide layer is a passivation layer formed on one surface of the lithium transfer film, which suppresses or prevents the occurrence of side reactions caused by formation of lithium oxide or nitride on the surface of the lithium transfer film, thereby suppressing or preventing lithium loss. The surface oxide layer may suppress a sudden reaction between the electrode and the lithium metal layer during the lithium transfer process, thereby suppressing a heat generation phenomenon, and may serve to reduce nitriding or oxidation reactions that may promote additional heat generation.

Such a passivation layer tends to be hard but is a very thin film. Thus, there is a problem in that the passivation layer may be easily broken by application of tension during the roll-to-roll processing. In general, lithium metal has properties of high ductility and softness, and has an elastic modulus of several GPa. Thus, as the lithium metal layer is deformed during the process, the passivation layer of a lithium oxide thin film having a relatively very high elastic modulus (several tens of Gpa)has a characteristic of being easily broken. Therefore, in order to suppress the deformation of the lithium metal layer during the process, the mechanical properties of the base layer on which the lithium metal layer is formed, for example, the strain(e.g., elastic modulus and elongation) caused by a tensile load, needs to be small.

The lithium transfer film according to one embodiment of the present disclosure has a characteristic that is not easily stretched by application of tension, and to this end, the base layer that satisfies certain mechanical properties is used such that the strain in all directions of the MD (machine direction) and the TD (transverse direction) is small (a certain value or less),and also the deviation of the strain for each of the MD and TD is small (a certain value or less). This suppresses or prevents damages to the passivation layer during the roll-to-roll processing.

The lithium transfer film according to one embodiment of the present disclosure includes the base layer. The base layer may be used without limitation as long as it has characteristics of withstanding process conditions such as high temperature in the step of depositing the lithium metal layer, and suppressing or preventing a reverse peeling problem, which is a phenomenon that the lithium metal layer is transferred onto the base layer during a winding process for transferring the deposited lithium metal layer.

In one embodiment of the present disclosure, the base layer may be at least one type selected from the group including polyethylene terephthalate (PET), polyethylene naphthalate (PEN), polyimide (PI), poly(methylmethacrylate) (PMMA), polypropylene, polyethylene and polycarbonate. According to one embodiment, the base layer may be polyethylene terephthalate (PET) or polyethylene naphthalate (PEN).

In one embodiment of the present disclosure, the thickness of the base layer may be 1 μm to 300 μm, and may satisfy the range of 1 μm to 100 μm, or 1 μm to 50 μm.

When the thickness of the base layer satisfies the above range, there is a characteristic in that the transfer of lithium metal to the negative electrode active material layer side may efficiently occur, and the reverse transfer may be suppressed or prevented.

In one embodiment of the present disclosure, the Young's Modulus of the base layer in each of the MD and TD is 4.2 GPa or more, and the elongation in each of the MD and TD is 130% or less.

In one embodiment of the present disclosure, the Young's Modulus of the base layer in each of the MD and TD is 4.2 GPa or more, 4.5 GPa or more, or 4.6 GPa or more, and the elongation in each of the MD and TD is 130% or less, or 125% or less.

In one embodiment of the present disclosure, the Young's Modulus of the base layer in each of the MD and TD is 4.2 GPa or more and 8 GPa or less, 4.5 GPa or more and 7 GPa or less, or 4.6 GPa or more and 6 GPa or less, and the elongation in each of the MD and TD is 70% or more and 130% or less, or 80% or more and 125% or less.

When the ranges of the Young's Modulus and the elongation in each of the MD and TD are satisfied, the base layer according to one embodiment of the present disclosure is not easily deformed according to the tension application in the range of 10N to 30N required in a process of transferring the lithium transfer film to the electrode by roll-to-roll processing. Thus, the damage to the passivation layer may be suppressed efficiently.

In one embodiment of the present disclosure, the deviation of elongation of the base layer in the MD and TD is ±3.5 or less, ±3.3 or less, or ±3 or less.

When the base layer according to one embodiment of the present disclosure has the elongation deviation in the MD and TD within the above range, the base layer is not excessively deformed in one direction during the roll-to-roll processing. Thus, the damage to the passivation layer may be suppressed or prevented.

In particular, even if the elongation in each of MD and TD of the base layer according to one embodiment of the present disclosure is 130% or less, if the elongation deviation exceeds the range, damage to the passivation layer may occur due to a high tensile force (30 N or more).

The lithium transfer film according to one embodiment of the present disclosure includes the lithium metal layer. Here, the lithium metal layer is a layer that contains lithium metal for prelithiation of at least one surface of an electrode active material layer or formation of a lithium metal electrode, and a commonly used Li metal foil may be used, but the present disclosure is not limited thereto.

In one embodiment of the present disclosure, the thickness of the lithium metal layer may be 0.1 $\mu$m to 15 $\mu$m, 0.5 $\mu$m to 13 $\mu$m, or 1 $\mu$m to 10 $\mu$m.

In one embodiment of the present disclosure, when the thickness of the lithium metal layer satisfies the above range, prelithiation for compensating for the irreversible capacity may be performed, the possibility of incomplete transfer may be reduced due to the difficulty of peeling of the lithium metal layer, heat generated during the transfer process may be reduced, and the formation of lithium by-products that may occur due to an excessively long prelithiation reaction time can be suppressed, thereby improving the performance of the electrode.

In one embodiment of the present disclosure, a deposition method for depositing the lithium metal layer to the base layer may be selected from a physical vapor deposition (PVD) method, and a chemical vapor deposition (CVD) method. Among the PVD methods, a thermal evaporation method may be mainly used, but is not limited thereto, and various deposition methods used in the art may be used.

The lithium transfer film according to one embodiment of the present disclosure includes the passivation layer. The passivation layer may be present on the opposite surface to the surface where the base layer is present, with respect to the lithium metal layer. The passivation layer is a hard and thin inorganic film, and may suppress loss of lithium, which occurs due to side reactions caused by lithium oxide or nitride formed on the surface of the lithium transfer film during the transfer process. Also, it is possible to reduce the risk of ignition caused by a nitriding or oxidation reaction.

In one embodiment of the present disclosure, the passivation layer may be formed on the surface of the lithium metal layer, or may be formed by treating the surface of the lithium metal layer with carbon dioxide ($CO_2$) gas. According to one embodiment, the passivation layer may include at least one of $Li_2CO_3$ and $Li_2O$ formed by treating the surface of the lithium metal layer with carbon dioxide ($CO_2$) gas.

That is, in one embodiment of the present specification, the passivation layer may include at least one of $Li_2CO_3$ and $Li_2O$.

In one embodiment of the present disclosure, the Young's Modulus of the passivation layer may be about 5 times or more greater than the Young's Modulus of the base layer, about 6 times or more, or about 10 times or more.

In one embodiment of the present disclosure, the thickness of the passivation layer may be 1 nm to 200 nm, 5 nm to 200 nm, or 5 nm to 100 nm.

In one embodiment of the present disclosure, when the thickness of the passivation layer satisfies the above range, it is possible to sufficiently protect the surface of the lithium metal layer, and to suppress the promotion of oxidation and nitriding reactions of the lithium metal layer. Also, it is possible to suppress or prevent the side effects such as a decrease in the prelithiation reaction rate or an increase in the electrode resistance.

The lithium transfer film according to one embodiment of the present disclosure may further include a release layer between the base layer and the lithium metal layer.

In one embodiment of the present disclosure, the release layer may be at least one type selected from the group including polycarbonate (PC), polydimethylsiloxane (PDMS), polymethylhydrosiloxane (PMHS), polyimide (PI), polymethylmethacrylate (PMMA) and cyclo-olefin copolymer (COC). According to one embodiment, the release layer may be polymethylmethacrylate (PMMA).

In one embodiment of the present disclosure, the thickness of the release layer may be 0.05 $\mu$m to 3 $\mu$m, or 0.2 $\mu$m to 1 $\mu$m.

In one embodiment of the present disclosure, when the thickness of the release layer satisfies the above range, a sufficient release force of the lithium metal layer may be secured. Also, the release layer located on the surface after the transfer of the lithium metal layer does not perform a role of preventing heat dissipation, so that the formation of by-products may not be accelerated.

In one embodiment of the present disclosure, the release layer may be formed by a coating method. For example, the coating method may be a method selected from the group including dip coating, spray coating, spin coating, die coating, gravure coating, micro-gravure coating, comma coating and roll coating, but is not limited thereto. Various coating methods that may be used for forming a coating layer in the art, may be used.

In one embodiment of the present disclosure, as for a deposition method for depositing the lithium metal layer on the release layer, deposition methods for depositing the lithium metal layer on the base layer may be applied in the same manner.

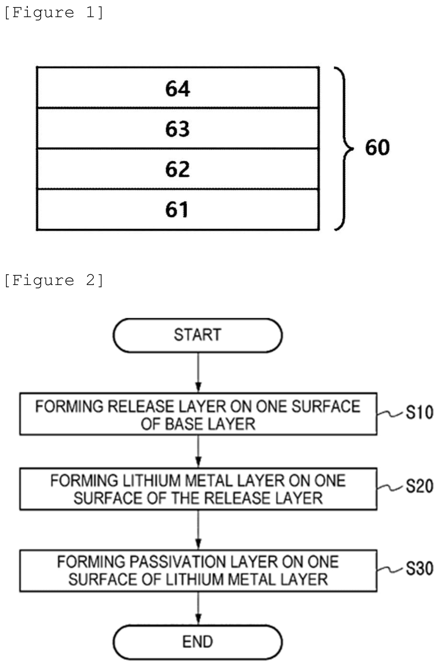

FIG. 1 is a view illustrating a stacked structure of a lithium transfer film 60 according to one embodiment of the present disclosure. For example, in the lithium transfer film 60, a release layer 62 is provided on one surface of a base layer 61, a lithium metal layer 63 is deposited on one surface of the release layer 62, and a passivation layer 64 is formed on one surface of the lithium metal layer 63. Meanwhile, the release layer 62 formed between the base layer 61 and the lithium metal layer 63 is optional, and the lithium metal layer 63 may be provided on the base layer 61 without the release layer 62.

FIG. 2 is a flowchart illustrating a method of manufacturing the lithium transfer film 60 according to one embodiment of the present disclosure.

Assuming that the release layer 62 is present between the base layer 61 and the lithium metal layer 63, the manufacturing method of the lithium transfer film 60 according to one embodiment of the present disclosure includes: the step S10 of forming the release layer 62 on one surface of the base layer 61; the step S20 of forming the lithium metal layer 63 on one surface of the release layer 62; and the step S30 of forming the passivation layer 64 on one surface of the lithium metal layer 63. According to one embodiment of the present disclosure, in the base layer 61, the Young's Modulus in each of the MD and TD is 4.2 GPa or more, the elongation in each of the MD and TD is 130% or less, and the elongation deviation of the MD and TD is $\pm 3.5$ or less.

In the method for manufacturing a lithium transfer film according to one embodiment of the present specification, the base layer, the lithium metal layer, and the passivation layer may be applied in the same manner as described above with respect to the base layer, the lithium metal layer, and the passivation layer.

The manufacturing method of the lithium transfer film 60 according to one embodiment of the present disclosure includes the step of depositing the lithium metal layer 63 on one surface of the base layer 61.

In the deposition step according to one embodiment of the present disclosure, as for the deposition method, the above-described deposition method for depositing the lithium metal layer 63 on the base layer 61 may be applied in the same manner. For example, the lithium metal layer 63 may be deposited on the base layer 61 through an evaporation deposition method, or a thermal evaporation deposition method.

In the deposition step of the lithium metal layer 63 according to one embodiment of the present disclosure, the deposition device may be used in various ways as long as it is a deposition device used in the art, and, for example, EWK-060 of ULVAC may be used.

In the deposition step of the lithium metal layer 63 according to one embodiment of the present disclosure, the deposition speed may be 0.5 m/min to 5 m/min,1 m/min to 3 m/min, or 2 m/min to 2.5 m/min.

Before the deposition step of the lithium metal layer 63 according to one embodiment of the present disclosure, the step of supplying the lithium metal layer 63 to the base layer 61 may be further included.

In the supply step of the lithium metal layer 63 according to one embodiment of the present disclosure, the temperature may be 10°C to 1,000°C, 100°C to 800°C, or 300°C to 600°C.

In one embodiment of the present disclosure, the step of depositing the lithium metal layer 63 may be performed after the step of forming the release layer 62 on one surface of the base layer 61.

The manufacturing method of the lithium transfer film 60 according to one embodiment of the present disclosure may include the step of forming the release layer 62 on one surface of the base layer 61; and the step of depositing the lithium metal layer 63 on the surface of the release layer 62 opposite to the surface where the base layer 61 is located.

In one embodiment of the present disclosure, for the step of forming the release layer 62 on one surface of the base layer 61, the above-described method for forming the release layer 62 may be applied in the same manner.

The manufacturing method of the lithium transfer film 60 according to one embodiment of the present disclosure includes the step of forming the passivation layer 64 on the surface of the lithium metal layer 63 opposite to the surface where the base layer 61 is located.

The step of forming the passivation layer 64 may include: the step of placing the base layer 61 on which the lithium metal layer 63 is deposited, in a vacuum chamber; the step of injecting Ar gas and $CO_2$ gas into the vacuum chamber; and the step of forming the passivation layer 64 on the surface of the lithium metal layer 63 opposite to the surface in contact with the base layer 61.

In one embodiment of the present disclosure, the pressure of the vacuum chamber in the step of forming the passivation layer 64 may be $10^{-3}$ torr to $10^{-1}$ torr, or $10^{-2}$ torr to $10^{-1}$ torr.

In the step of injecting Ar gas and $CO_2$ gas into the vacuum chamber to form the passivation layer 64 according to one embodiment of the present disclosure, the Ar gas and the $CO_2$ gas may be injected at a ratio of 1:10 to 10:1, or may be injected at a ratio of, for example, 8:2 to 2:8, or 8:2 to 1:1.

In one embodiment of the present disclosure, in the step of forming the passivation layer 64, after the step of injecting Ar gas and $CO_2$ gas into the vacuum chamber, the step of purging the gases until the vacuum chamber reaches normal pressure and then performing treatment for 1 min to 20 min, or 5 min to 10 min is further included.

In one embodiment of the present disclosure, the step of forming the passivation layer 64 may be performed at a temperature of 0 °C or more and 40 °C or less, specifically 10 °C or more and 30 °C or less, more specifically 20 °C or more and 28 °C or less.

In one embodiment of the present disclosure, the step of forming the passivation layer 64 may be performed at a room temperature.

In one embodiment of the present disclosure, in an electrode intermediate of a lithium secondary battery, an electrode current collector layer; an electrode active material layer; and the above-described lithium transfer film 60 are sequentially stacked, and the passivation layer 64 of the lithium transfer film 60 may face the electrode active material layer of the electrode intermediate.

The electrode intermediate is an electrode intermediate for manufacturing a prelithiated electrode and indicates a state where the lithium transfer film 60 of the present disclosure is stacked on one surface of the electrode active material layer for prelithiation, before the start of transfer of the lithium metal layer 63 of the present disclosure on one surface of the electrode active material layer or during the transfer. Here, the prelithiation reaction may be started simultaneously with the start of transfer of the lithium metal layer 63 on one surface of the electrode active material layer, or the prelithiation reaction may be started within a few seconds after the start of transfer.

In one embodiment of the present disclosure, in the electrode intermediate, the electrode current collector layer; and the lithium transfer film 60 including the base layer 61, the lithium metal layer 63, and the passivation layer 64 are sequentially stacked, and the passivation layer 64 of the lithium transfer film 60 may face the electrode current collector layer.

The electrode intermediate is an electrode intermediate for manufacturing a negative electrode of a Li-metal electrode, and indicates a state where the lithium transfer film 60 is stacked on one surface of the electrode current collector layer in order to transfer the lithium metal layer to one surface of the electrode current collector layer.

In one embodiment of the present disclosure, the electrode for a lithium secondary battery includes an electrode active material layer or an electrode collector layer, and the lithium transfer film described above may be transferred to at least one surface of the electrode active material layer or the electrode collector layer.

When the above-described lithium transfer film 60 according to one embodiment of the present disclosure is transferred to at least one surface of the electrode active material layer, the prelithiated electrode may be formed, and when the lithium transfer film 60 is transferred to at least one surface of the electrode current collector layer, the negative electrode of the lithium metal battery may be formed.

In another embodiment of the present disclosure, the electrode for the lithium secondary battery may be either the prelithiated electrode or the negative electrode of the lithium metal battery.

In another embodiment of the present disclosure, the prelithiated electrode may be a prelithiated negative electrode, and the prelithiated negative electrode may include a negative electrode active material layer disposed on at least one surface of a negative electrode current collector. The negative electrode active material layer may include a negative electrode active material. Further, the negative electrode active material layer may further include a thickener.

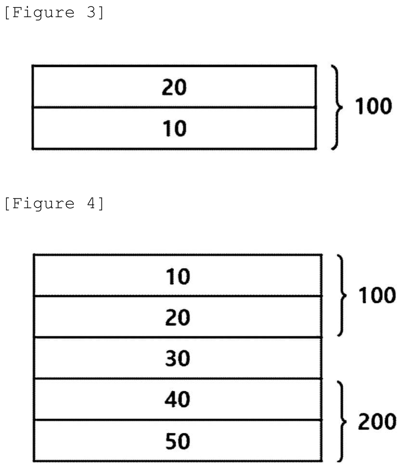

FIG. 3 is a view illustrating a stacked structure of the prelithiated negative electrode according to one embodiment of the present disclosure. For example, a negative electrode 100 for the lithium secondary battery can be found in which a negative electrode active material layer 20 is included in one surface of a negative electrode current collector layer 10. Although FIG.3 illustrates that the negative electrode active material layer 20 is formed on one surface of the negative electrode current collector layer 10, the negative electrode active material layer 20 may be formed on both surfaces of the negative electrode current collector layer 10.

In one embodiment of the present disclosure, the negative electrode current collector layer may generally have a thickness of 1 $\mu$m to 100 $\mu$m. This negative electrode current collector layer is not particularly limited as long as it has high conductivity without causing chemical changes in the corresponding battery. For example, copper, stainless steel, aluminum, nickel, titanium, baked carbon, copper or stainless steel whose surface is treated with carbon, nickel, titanium, silver, etc., and aluminum-cadmium alloy may be used. Also, it is possible to strengthen the bonding strength of the negative electrode active material by forming fine irregularities on the surface, and the use in various forms such as a film, a sheet, a foil, a net, a porous body, a foam, and a nonwoven fabric is possible.

In one embodiment of the present disclosure, the thickness of the negative electrode current collector layer is 1 $\mu$m to 100 $\mu$m, and the thickness of the negative electrode current collector layer may be 20 $\mu$m to 50 $\mu$m. However, the thickness may be variously modified according to the type and application of the negative electrode to be used, but is not limited thereto.

The negative electrode active material layer 20 may be formed by coating a negative electrode slurry containing a negative electrode active material, a negative electrode binder, a negative electrode conductive material and/or a thickener, on at least one surface of the negative electrode current collector layer 10. This means that the negative electrode active material layer 20 may be formed by applying, drying and roll-pressing the negative electrode slurry on at least one surface of the negative electrode current collector layer 10.

In one embodiment of the present disclosure, the negative electrode slurry may include: a negative electrode active material layer composition that contains the negative electrode active material, the negative electrode binder, the negative electrode conductive material and/or the thickener; and a slurry solvent.

In one embodiment of the present disclosure, the solid content of the negative electrode slurry may satisfy a range of 5% to 40%.

In another embodiment, the solid content of the negative electrode slurry may satisfy a range of 5% to 40%, 7% to 35%, or 10% to 30%.

The solid content of the negative electrode slurry may mean the amount of the composition of the negative electrode active material layer 20 included in the negative electrode slurry, and may mean the content of the composition of the negative electrode active material layer relative to 100 parts by weight of the negative electrode slurry.

When the solid content of the negative electrode slurry satisfies the above range, the viscosity is appropriate in formation of the negative electrode active material layer. Therefore, the particle agglomeration phenomenon of the composition of the negative electrode active material layer 20 may be minimized, and thus the negative electrode active material layer may be efficiently formed.

In one embodiment of the present disclosure, the solvent may include those known in the art. For example, the solvent may be water (e.g., distilled water) or NMP (N-methyl-2-pyrrolidone).

The negative electrode according to one embodiment of the present disclosure may be formed by coating and drying the negative electrode slurry on one surface or both surfaces of the negative electrode current collector layer 10, and through the drying step, the slurry solvent in the negative electrode slurry may be dried.

In one embodiment of the present disclosure, the negative electrode active material layer 20 includes the negative electrode active material, the negative electrode conductive material, and the negative electrode binder, and the negative electrode active material includes a silicon-based active material. The silicon-based active material may include at least one selected from the group including Si, SiOx (0<x<2), Si/C, and Si alloy.

In one embodiment of the present disclosure, the silicon-based active material may include at least one selected from the group including Si and SiOx (0<x<2).

In one embodiment of the present disclosure, for the negative electrode active material, pure silicon (Si) may be used as the silicon-based active material. Using pure silicon (Si) as the negative electrode active material may mean that on the basis of the total of 100 parts by weight of the above negative electrode active material, pure Si particles not combined with other particles or elements may be included in an amount of 60 parts by weight or more, 65 parts by weight or more, or 70 parts by weight or more relative to 100 parts by weight of the silicon-based active material, or may be included in a range of 95 parts by weight or less, 90 parts by weight or less, or 85 parts by weight or less.

In one embodiment of the present disclosure, the negative electrode active material may use SiOx (0<x<2) as the silicon-based active material, and the SiOx (0<x<2) corresponds to an amorphous matrix in the silicon-based active material. The SiOx (0<x<2) may have a form partially including Si and SiO2, and the Si may form a phase. That is, the x corresponds to the number ratio of O to Si included in the SiOx (0<x<2).

The silicon-based active material may be formed by heating and vaporizing mixed powder of Si powder and SiO2 powder and then depositing the vaporized mixed gas, and the mixed powder of Si powder and SiO2 powder may be heat-treated at 1400°C to 1800°C or 1400°C to 1600°C under vacuum.

In one embodiment of the present disclosure, the SiOx (0<x<2) may be included in an amount of 40 parts by weight or more, 50 parts by weight or more, or 60 parts by weight or more relative to the total of 100 parts by weight of the negative electrode active material layer 20, or may be included in an of 100 parts by weight or less, 90 parts by weight or less, or 80 parts by weight or less. When the silicon-based active material includes SiOx (0<x<2) within the above range, the discharge capacity of the lithium secondary battery may be improved.

In one embodiment of the present disclosure, the negative electrode active material may include metal impurities.

The metal impurities are impurities that may be contained in silicon and the content thereof may satisfy a range of 0.1 parts by weight or less relative to 100 parts by weight of the negative electrode active material layer.

Meanwhile, the average particle diameter (D50) of the silicon-based active material in the present disclosure may be 5 μm to 10 μm, 5.5 μm to 8 μm, or 6 μm to 7 μm.

When the average particle diameter falls within the above range, the specific surface area of particles falls within an appropriate range, and a negative electrode slurry is formed with a viscosity falling within an appropriate range. Accordingly, particles constituting the negative electrode slurry are smoothly dispersed. Also, since the size of the silicon-based active material has a value equal to or greater than the above range of the lower limit value, the contact areas between silicon particles and conductive materials are excellent due to a composite composed of a conductive material and a binder within the negative electrode slurry. This increases the possibility that a conductive network will be continued, thereby increasing the capacity retention. Meanwhile, when the average particle diameter satisfies the above range, excessively large silicon particles are excluded and a smooth surface of the negative electrode is formed. This may suppress or prevent a current density non-uniformity phenomenon during charging/discharging.

In one embodiment of the present disclosure, the silicon-based active material generally has a characteristic BET specific surface area. The BET specific surface area of the silicon-based active material is 0.01 $m^2/g$ to 150.0 $m^2/g$, 0.1 $m^2/g$ to 100.0 $m^2/g$, 0.2 $m^2/g$ to 80.0 $m^2/g$, or 0.2 $m^2/g$ to 18.0 $m^2/g$. The BET specific surface area is measured in accordance with DIN (Deutsches Institut für Normung, German institute for standardization) 66131 (using nitrogen).

In one embodiment of the present disclosure, the silicon-based active material may exist in, for example, a crystalline or amorphous form, and may not be porous. The Si may be spherical or fragmented particles. The silicon particles may also have a fibrous structure or may be present in the form of a silicon-containing film or coating.

In one embodiment of the present disclosure, the silicon-based active material may be 40 parts by weight or more relative to the total of 100 parts by weight of the negative electrode active material layer 20.

In one embodiment of the present disclosure, the silicon-based active material may be included in an amount of 40 parts by weight or more, 50 parts by weight or more, or 60 parts by weight or more, relative to the total of 100 parts by weight of the negative electrode active material layer 20, and may be included in an amount of 95 parts by weight or less, 90 parts by weight or less, or 80 parts by weight or less.

In the charging/discharging reaction of the lithium secondary battery, lithium released from the positive electrode is intercalated into the negative electrode during charging, and is deintercalated from the negative electrode and is returned to the positive electrode again during discharging. In the case of a silicon-based negative electrode active material, the volume change and surface side reactions are severe, so that a problem occurs in which a large amount of lithium intercalated into the negative electrode during initial charging cannot return to the positive electrode again, and the initial irreversible capacity increases. When the initial irreversible capacity increases, a problem of reduction of the battery capacity and cycles occurs.

In consideration of this, in the case of the present disclosure, during the lithium transfer process in the prelithiation process, a pre-treatment process for the negative electrode is provided prior to the prelithiation process, so that lithium metal is easily transferred from a transfer stack, and prelithiation of lithium may be uniformly performed within the negative electrode active material layer 20.

Conventionally, only a graphite-based compound has been generally used as the negative electrode active material. Meanwhile, recently, as the demand for high-capacity batteries increases, there are increasing attempts to use a mixture of a silicon-based compound so as to increase the capacity. However, in the case of the silicon-based compound, there is a limitation in that the volume rapidly expands during a charging/discharging process, which may damage a conductive path formed in the negative electrode active material layer, and moreover decrease the battery performance. Thus, the type of the negative electrode conductive material to be used together with the silicon-based active material is important.

Accordingly, in one embodiment of the present disclosure, the negative electrode conductive material may include at least one selected from the group including a planar conductive material; a linear conductive material and a dot-type conductive material, and may include at least one selected from the group including, for example, a planar conductive material and a linear conductive material.

In one embodiment of the present disclosure, the negative electrode conductive material may be 1 part by weight to 40 parts by weight relative to the total of 100 parts by weight of the negative electrode active material layer.

In one embodiment, the negative electrode conductive material may be included in an amount of 1 part by weight to 40 parts by weight, 5 parts by weight to 30 parts by weight, or 10 parts by weight to 25 parts by weight relative to the total of 100 parts by weight of the negative electrode active material layer.

When the content of the negative electrode conductive material satisfies the above range, there is an effect of not damaging the conductive path formed within the negative electrode active material layer.

In one embodiment of the present disclosure, the planar conductive material used as the above-mentioned negative electrode conductive material has a different structure and role from a carbon-based active material generally used as the negative electrode active material. For example, the carbon-based active material used as the negative electrode active material may be artificial graphite or natural graphite, and refers to a material that is processed and used in the form of a spherical or dot shape so as to facilitate the storage and release of lithium ions.

Meanwhile, the planar conductive material used as the negative electrode conductive material is a material having a planar or plate shape, and may be expressed as plate-shaped graphite. The planar conductive material is a material included to maintain a conductive path within the negative electrode active material layer 20 and refers to a material that is not used as a role of storing and releasing lithium but is used to secure a conductive path with a planar shape within the negative electrode active material layer 20.

In one embodiment of the present disclosure, the fact that the plate-shaped graphite is used as the conductive material means that the graphite is processed into a planar or plate shape and is not used as a role of storing or releasing lithium but is used as a material for securing a conductive path. Here, the negative electrode active material included together with the plate-shaped graphite has high-capacity characteristics in storing and releasing lithium, and performs a role of storing and releasing all lithium ions transferred from the positive electrode.

In one embodiment of the present disclosure, the use of the carbon-based active material as the active material means that the carbon-based active material is processed into a dot-type or spherical shape and is used as a material that performs a role of storing or releasing lithium.

In one embodiment of the present disclosure, the negative electrode conductive material may include the planar conductive material.

In one embodiment of the present disclosure, the planar conductive material refers to a conductive material having a two-dimensional (2D) structure in which atoms have a thickness of a single atomic layer or a plurality of atomic layers (two or more layers) and form a crystal structure in a plane. The planar conductive material means a material for securing a conductive path with a planar shape within the negative electrode active material layer, and at the same time can perform a role of suppressing a conductive path from being disconnected by volume expansion and can be expressed as a plate-shaped conductive material or a bulk-type conductive material.

In one embodiment of the present disclosure, the planar conductive material may include at least one selected from the group including plate-shaped graphite, graphene, graphene oxide, and graphite flakes, and may be plate-shaped graphite in one embodiment.

In one embodiment of the present disclosure, the average particle diameter (D50)of the planar conductive material may be 2 $\mu$m to 7 $\mu$m, 3 $\mu$m to 6 $\mu$m, or 4 $\mu$m to 5 $\mu$m. When the above range is satisfied, due to a sufficient particle size, dispersion is easy without causing an excessive increase in the viscosity of the negative electrode slurry. Therefore, the dispersion effect is excellent in the dispersion using the same equipment and time.

In one embodiment of the present disclosure, D10 of the planar conductive material may be 0.5 $\mu$m to 1.7 $\mu$m, D50 may be 2.5 $\mu$m to 3.5 $\mu$m, and D90 may be 6.8 $\mu$m to 15.0 $\mu$m.

In one embodiment of the present disclosure, as for the planar conductive material, a high specific surface area-planar conductive material having a high BET specific surface area; or a low specific surface area-planar conductive material may be used.

In one embodiment of the present disclosure, the high specific surface area-planar conductive material; or the low specific surface area-planar conductive material may be used as the planar conductive material. However, the planar conductive material according to the present disclosure may be affected to some extent by the dispersion effect in electrode performance, and thus the low specific surface area-planar conductive material causing no problems in dispersion may be used.

In one embodiment of the present disclosure, the BET specific surface area of the planar conductive material may be 5 m$^2$/g to 500 m$^2$/g, 5 m$^2$/g to 300 m$^2$/g, or 5 m$^2$/g to 250 m$^2$/g.

In another embodiment, the planar conductive material is a high specific surface-area planar conductive material, and its BET specific surface area may satisfy a range of 50 m$^2$/g to 500 m$^2$/g, 80 m$^2$/g to 300 m$^2$/g, or 100 m$^2$/g to 300 m$^2$/g.

In another embodiment, the planar conductive material is a low specific surface area-planar conductive material, and its BET specific surface area may satisfy a range of 5 m$^2$/g to 40 m$^2$/g, 5 m$^2$/g to 30 m$^2$/g, or 5 m$^2$/g to 25 m$^2$/g.

In one embodiment of the present disclosure, the negative electrode conductive material may include linear conductive materials. The linear conductive material refers to a conductive material having a one-dimensional (1D) structure with a nanometer unit level diameter and a high aspect ratio or a conductive material having a fibrous structure such as a cylindrical type and a tube type. Examples of the linear conductive material may include carbon nanotubes, and the like.

The carbon nanotubes may be bundle-type carbon nanotubes. The bundle-type carbon nanotubes may include a plurality of carbon nanotube units. Here, the 'bundle-type' refers to a secondary shape in the form of a bundle or a rope unless otherwise stated, in which carbon nanotube units are arranged side by side or are entangled while the longitudinal axes of the carbon nanotube units are substantially in the same orientation. The carbon nanotube unit has a graphite surface (graphite sheet) in the form of a cylinder with a nano-sized diameter, and has a sp2-bonded structure. Here, depending on angle and structure in which the graphite surface is rolled, characteristics of a conductor or a semiconductor can be exhibited. The bundle-type carbon nanotubes may be uniformly dispersed in the manufacturing of the negative electrode as compared to the entangled-type carbon nanotubes, and then a conductive network in the negative electrode may be smoothly formed, thereby improving the conductivity of the negative electrode.

In one embodiment of the present disclosure, the negative electrode conductive material may include at least one selected from the group including plate-shaped graphite, single-walled carbon nanotubes (SWCNTs) and multi-walled carbon nanotubes (MWCNTs), but is not limited thereto.

In one embodiment of the present disclosure, the BET specific surface area of the linear conductive material may be 100 m$^2$/g to 10,000 m$^2$/g, 500 m$^2$/g to 5,000 m$^2$/g, or 1,000 m$^2$/g to 1,500 m$^2$/g.

Also, in one embodiment of the present disclosure, the aspect ratio of the linear conductive material may be 500 or more, 1,000 or more, or 10,000 or more, and may be 1,000,000 or less, or 100,000 or less.

In one embodiment of the present disclosure, when the linear conductive material satisfies the ranges of the BET specific surface area and the aspect ratio, there is an effect of suppressing an electrical short circuit between the negative electrode active materials.

In one embodiment of the present disclosure, the negative electrode conductive material may further include a dot-type conductive material.

In one embodiment of the present disclosure, the dot-type conductive material refers to a conductive material with a zero-dimensional (0D) structure, in which a crystal mass structure composed of one to several hundreds of atoms is shaped like a round ball and has a volume. The dot-type conductive material refers to a conductive material which can be used to improve conductivity in the negative electrode, and has conductivity without causing chemical changes. The dot-type conductive material may be at least one type selected from the group including natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide and polyphenylene derivatives, and may include carbon black in terms of high conductivity achievement, and excellent dispersibility.

In one embodiment of the present disclosure, the BET specific surface area of the dot-type conductive material may be 40 $m^2/g$ to 70 $m^2/g$, 45 $m^2/g$ to 65 $m^2/g$, or 50 $m^2/g$ to 60 $m^2/g$.

In one embodiment of the present disclosure, the particle diameter of the dot-type conductive material may be 10 nm to 100 nm, 20 nm to 90 nm, or 20 nm to 60 nm.

The negative electrode conductive material according to the present disclosure has a substantially different configuration from a conductive material applied to the positive electrode. The negative electrode conductive material according to the present disclosure performs a role of making a contact point between silicon-based active materials causing a very large expansion in the electrode volume in charging and discharging. The negative electrode conductive material has substantially different configurations and roles from a positive electrode conductive material that performs a role of a buffer when rolled, and provides some conductivity.

Also, the negative electrode conductive material according to the present disclosure is applied to the silicon-based negative electrode active material, and has a substantially different configuration from a conductive material applied to the graphite-based active material. The conductive material used for an electrode having the graphite-based active material simply has smaller particles than the active material, and has a property of improving output characteristics and providing some conductivity, and thus has different configurations and roles from the negative electrode conductive material applied together with the silicon-based negative electrode active material as in the present disclosure.

In one embodiment of the present disclosure, the negative electrode binder may include at least one selected from the group including polyvinylidene fluoride-hexafluoropropylene copolymer (PVDF-co-HFP), polyvinylidenefluoride, polyacrylonitrile, polymethylmethacrylate, polyacrylamide, polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber (SBR), fluororubber, poly acrylic acid and their substitutes obtained by replacing hydrogen with Li, Na or Ca, and may include various copolymers of these.

The negative electrode binder according to one embodiment of the present disclosure performs a role of holding the active material and the conductive material to suppress or prevent distortion and structural deformation of a negative electrode structure in the volume expansion and relaxation of the silicon-based active material. General binders satisfying the above role can be applied, and at least one type of binder selected from the group including polyacrylamide (PAM) and styrene butadiene rubber may be included.

In one embodiment of the present disclosure, the content of the negative electrode binder may be 30 parts by weight or less, 20 parts by weight or less, or 10 parts by weight or less, and may be 1 part by weight or more or 3 parts by weight or more relative to the total of 100 parts by weight of the negative electrode active material layer 20.

In one embodiment of the present disclosure, the weight average molecular weight of the binder may be 100,000 g/mol to 1,500,000 g/mol.

When the weight average molecular weight of the binder satisfies the above range, there is a characteristic in that the mechanical strength is excellent, and the interaction between molecules is high so that the binding strength of the electrode is excellent. Also, when the above range is satisfied, the viscosity of the binder can be selected in an appropriate range. Thus, when the negative electrode is manufactured using this, the coating property of the electrode may be further improved.

In the manufacturing method of the prelithiated negative electrode according to another embodiment of the present disclosure, the prelithiated negative electrode may be formed by transferring the lithium transfer film to at least one surface of the above-mentioned negative electrode active material layer 20.

The manufacturing method of the prelithiated negative electrode according to the present disclosure has a characteristic in that prelithiation is carried out on at least one surface of the negative electrode active material layer in order to improve the Coulomb Efficiency. Since the process speed is faster than in the prelithiation by a stabilized lithium metal powder (SLMP) method or an electrochemical method, the prelithiation is carried out by the lithium transfer method having high mass productivity.

In one embodiment of the present disclosure, the step of transferring the above-mentioned lithium transfer film to at least one surface of the negative electrode active material layer 20 and forming the prelithiated negative electrode includes: the step of bringing the lithium transfer film into contact with the negative electrode active material layer 20 such that the lithium metal layer faces at least one surface of the negative electrode active material layer; and the step of applying the pressure.

In one embodiment of the present disclosure, the step of bringing the lithium transfer film into contact with the negative electrode active material layer 20 such that the lithium metal layer 63 faces at least one surface of the negative electrode active material layer 20 is a step of transferring lithium metal to the negative electrode active material layer 20.

In one embodiment of the present disclosure, in the step of applying the pressure, the prelithiation caused by the transfer to the negative electrode active material layer 20 may be more actively carried out, and despite high energy density, there is an effect in that a negative electrode can be formed with a thin thickness.

Here, the lithium transfer film 60 is placed such that the lithium metal layer 63 of the lithium transfer film 60 is in contact with one surface or both surfaces of the negative electrode active material layer 20, and then a load of 10 kgf to 500 kgf is applied and a transfer process can be carried out through roll pressing. Next, a process of removing the base layer or the release layer and the base layer may be included.

In one embodiment of the present disclosure, the step of removing the base layer 61 of the lithium transfer film 60 or the release layer 62 and the base layer 61 may be performed after the lithium metal layer 63 and the negative electrode active material layer 20 are brought into contact with each other and the transfer is performed through application of pressure.

In the manufacturing method of the negative electrode for the lithium secondary battery according to one embodiment of the present disclosure, the prelithiation may proceed from the moment when the lithium metal layer 63 of the lithium transfer film 60 comes in contact with the negative electrode active material layer 20, may proceed from the step of pressure application, or may proceed from the step of removing the base layer or the release layer and the base layer.

In another embodiment of the present disclosure, the negative electrode of the lithium metal battery may include the negative electrode current collector having the above-mentioned lithium transfer film 60 transferred to at least one surface thereof.

Here, the above-mentioned contents are applicable to the negative electrode current collector and the transfer method of the lithium transfer film 60.

The lithium secondary battery according to one embodiment of the present disclosure may include the above-mentioned electrode for the lithium secondary battery according to one embodiment. The secondary battery may include the electrode for the lithium secondary battery, a separator and an electrolyte, and the electrode for the lithium secondary battery may be a negative electrode or a positive electrode.

FIG. 4 is a view illustrating a stacked structure of the lithium secondary battery using the prelithiated electrode according to one embodiment of the present disclosure. The stacked structure of the lithium secondary battery includes: a negative electrode 100 for the lithium secondary battery, which includes the negative electrode active material layer 20 on one surface of the negative electrode current collector layer 10; and a positive electrode 200 for the lithium secondary battery, which includes a positive electrode active material layer 40 on one surface of a positive electrode current collector layer 50. This illustrates that the negative electrode 100 for the lithium secondary battery and the positive electrode 200 for the lithium secondary battery are formed as a stacked structure with a separator 30 being interposed therebetween.

The positive electrode may include: a positive electrode current collector layer; and a positive electrode active material layer formed on at least one surface of the positive electrode current collector layer and containing the positive electrode active material.

In the positive electrode, the positive electrode current collector layer is not particularly limited as long as it has conductivity without causing chemical changes in the battery. For example, stainless steel, aluminum, nickel, titanium, baked carbon or aluminum or stainless steel whose surface is treated with carbon, nickel, titanium, silver, etc. may be used. Also, the positive electrode current collector layer may usually have a thickness of 3 $\mu$m to 500 $\mu$m, and it is also possible to increase the adhesion of the positive electrode active material by forming fine irregularities on the surface of the positive electrode current collector layer. For example, the use in various forms such as a film, a sheet, a foil, a net, a porous body, a foam, and a nonwoven fabric is possible.

The positive electrode active material according to one embodiment of the present disclosure may include at least one selected from the group including lithium manganese oxide, lithium cobalt oxide, lithium nickel oxide, lithium iron oxide, lithium aluminum oxide, or lithium composite oxide as a combination of these.

Examples of the positive electrode active material may include: layered compounds such as lithium cobalt oxide ($LiCoO_2$) and lithium nickel oxide ($LiNiO_2$) or compounds substituted with one or more transition metals; lithium iron oxide such as $LiFe_3O_4$; lithium manganese oxide such as chemical formulas $Li_{1+c1}Mn_{2-c1}O_4$ ($0 \leq c1 \leq 0.33$), $LiMnO_3$, $LiMn_2O_3$, and $LiMnO_2$; lithium copper oxide ($Li_2CuO_2$); vanadium oxide such as $LiV_3O_8$, $V_2O_5$, and $Cu_2V_2O_7$; Ni site-type lithium nickel oxide represented by the chemical formula $LiNi_{1-c2}M_{c2}O_2$ (where M is at least one selected from the group including Co, Mn, Al, Cu, Fe, Mg, B and Ga, and $0.01 \leq c2 \leq 0.5$ is satisfied); lithium manganese composite oxide represented by a chemical formula $LiMn_{2-c3}Mc_3O_2$ (where M is at least one selected from the group including Co, Ni, Fe, Cr, Zn and Ta, and

0. 01$\leq$c3$\leq$0.1 is satisfied) or $Li_2Mn_3MO_8$ (where M is at least one selected from the group including Fe, Co, Ni, Cu and Zn); and $LiMn_2O_4$ in which a part of Li in the chemical formula is substituted with an alkaline earth metal ion, but are not limited to these. The positive electrode may also be Li-metal.

The positive electrode active material layer may include a positive electrode conductive material and a positive electrode binder together with the above-described positive electrode active material.

Here, the positive electrode conductive material is used to provide conductivity to the electrode, and can be used as long as it has electronic conductivity without causing chemical changes in a configured battery. Examples thereof may include: graphite such as natural graphite or artificial graphite; carbon-based materials such as carbon black, acetylene black, Ketjen black, channel black, furnace black, lampblack, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, and among these, one type may be used alone or a mixture of two or more types may be used.

Also, the positive electrode binder performs a role of improving the adhesion between particles of the positive electrode active material and the adhesive strength between the positive electrode active material and the positive electrode current collector. Examples thereof may include polyvinylidene fluoride (PVdF), polyvinylidene fluoride-hexafluoropropylene copolymer (PVdF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-dienepolymer (EPDM), sulfonated-EPDM, styrene butadiene rubber(SBR), fluororubber, or various copolymers thereof, and among these, one type may be used alone or a mixture of two or more types may be used.

The solvent used for the slurry of the positive electrode composition may be a solvent generally used in the relevant technical field. Examples thereof may include dimethyl sulfoxide (DMSO), isopropyl alcohol, N-methyl pyrrolidone (NMP), acetone and water, and among these, one type may be used alone or a mixture of two or more types may be used. The amount of the solvent to be used may be set in consideration of the coating thickness and the production yield of the slurry. As a result, a viscosity for exhibiting excellent thickness uniformity can be obtained when the active material, the conductive material and the binder are dissolved or dispersed, and then are applied for manufacturing the positive electrode and the negative electrode. Also, in another manufacturing method of the positive electrode and the negative electrode, the composition for forming the active material layer may be cast on a separate support, and then a film obtained through exfoliation from the support may be laminated on the current collector.

The separator separates the negative electrode from the positive electrode, and provides a movement passage for lithium ions, and may be used without particular limitation as long as it is generally used as a separator in a secondary battery. The separator may have low resistance to ion movement of the electrolyte and excellent electrolyte moisture retention capacity. A porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a stacked structure of two or more layers of these may be used. Also, a conventional porous non-woven fabric, for example, a non-woven fabric made of high melting point-glass fiber, polyethylene terephthalate fiber, etc. may also be used. Also, a coated separator containing ceramic components or polymer materials may also be used so as to ensure heat resistance or mechanical strength, and may be optionally used in a single-layer or multi-layer structure.

Examples of the electrolyte may include an organic liquid electrolyte, an inorganic liquid electrolyte, a solid polymer electrolyte, a gel-type polymer electrolyte, a solid inorganic electrolyte, and a melted inorganic electrolyte, which can be used in manufacturing of lithium secondary batteries, but are not limited to these.

The electrolyte may include a non-aqueous organic solvent and a metal salt.

As for the non-aqueous organic solvent, it is possible to use, for example, aprotic organic solvents such as N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxyethane, tetrahydrofuran, 2-methyltetrahydrofuran, dimethyl sulfoxide, 1,3-dioxolane, formamide, dimethyl formamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Among the above carbonate-based organic solvents, ethylene carbonate and propylene carbonate, which are cyclic carbonates, can be used because they are high-viscosity organic solvents and can easily dissociate lithium salts due to a high dielectric constant. Then, when these cyclic carbonates are used through mixing with linear carbonates having a low viscosity and a low dielectric constant, such as dimethylcarbonate and diethylcarbonate, at an appropriate ratio, an electrolyte having a high electrical conductivity can be made.

As for the metal salt, a lithium salt may be used, and the lithium salt is a material that is easily soluble in the non-aqueous electrolyte. For example, as anions of the lithium salt, at least one type selected from the group including $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$,

$CH_3CO_2^-$, $SCN^-$ and $(CF_3CF_2SO_2)_2N^-$ may be used.

In addition to the electrolyte components, the electrolyte may further include one or more types of additives, such as, for example, a haloalkylene carbonate-based compound such as difluoro ethylene carbonate, pyridine, triethyl phosphite, triethanolamine, cyclic ether, ethylene diamine, n-glyme, hexamethylphosphoric acid triamide, nitrobenzene derivatives, sulfur, quinone imine dye, N-substituted oxazolidinone, N,N-substituted imidazolidine, ethylene glycoldialkyl ether, ammonium salt, pyrrole, 2-methoxy ethanol or aluminum trichloride.

One embodiment of the present specification provides a battery module comprising the lithium secondary batteries as unit cells, and a battery pack comprising the same.

In addition, another embodiment of the present specification provides a battery pack comprising said lithium secondary battery.

The lithium secondary battery according to the embodiments of the present disclosure stably exhibits excellent discharge capacity, output characteristics, and cycle performance, and thus, may be used for power sources in not only portable devices such as mobile phones, notebook computers, and digital cameras, but also medium-to-large devices selected from the group including electric vehicles, hybrid electric vehicles, plug-in hybrid electric vehicles and power storage systems. For example, the battery module or battery pack may be used as power sources for one or more medium-to-large devices among power tools; electric cars including an electric vehicle (EV), a hybrid electric vehicle, and a plug-in hybrid electric vehicle (PHEV); and power storage systems.

[Mode for Invention]

Hereinafter, Examples will be presented to help understanding of the present disclosure, but the Examples are merely illustrative of the present description. It is obvious to those skilled in the art that various modifications and changes can be made within the scope of the present description and the scope of the technical idea, and it is natural that such modifications and changes fall within the scope of the accompanying claims.

<Preparation Example 1>

Example 1

<Preparation of lithium transfer film>

A transfer film was prepared by coating 1 $\mu$m of acrylic resin (release layer) on a PET A base layer. Here, as the PET A, polyethylene terephthalate satisfying mechanical properties of Table 1 below was used.

Lithium was deposited on the acrylic resin coating layer of the transfer film through a thermal evaporation deposition method, and a lithium layer with a thickness of 6 $\mu$m was formed. Here, the deposition device was EWK-060 of ULVAC, and the deposition process was performed by setting the speed to 2.5 m/min, the temperature of a lithium supply to 500°C, and the temperature of a main roll to -25°C.

The prepared transfer film was placed in a chamber, and the chamber vacuum degree was set to $10^{-1}$ torr or less, and then a vacuum valve was closed. A gas purge valve was opened, and argon (Ar) gas and carbon dioxide ($CO_2$) gas were injected into the chamber at a ratio of 8:2 at room temperature. Each gas was purged until the vacuum degree of the chamber became normal pressure, and a lithium transfer film was prepared in which a passivation layer comprising $Li_2CO_3$ was formed on the surface of the deposited lithium thin film after processing for about 10 min.

Example 2

A lithium transfer film was prepared in the same manner as in Example 1 except that PEN (polyethylene naphthalate) having mechanical properties of Table 1 below was used for a base layer.

Comparative Example 1

A lithium transfer film was prepared in the same manner as in Example 1 except that PET B having mechanical properties of Table 1 below was used for a base layer.

Comparative Example 2

A lithium transfer film was prepared in the same manner as in Example 1 except that PET C having mechanical properties of Table 1 below was used for a base layer.

Comparative Example 3

A lithium transfer film was prepared in the same manner as in Example 1 except that PET D having mechanical properties of Table 1 below was used for a base layer.

Comparative Example 4

A lithium transfer film was prepared in the same manner as in Example 1 except that PET E having mechanical properties of Table 1 below was used for a base layer.

Comparative Example 5

A lithium transfer film was prepared in the same manner as in Example 1 except that PET F having mechanical properties of Table 1 below was used for a base layer.

The mechanical properties of the substrate layers used in Examples 1 and 2 and Comparative Examples 1 to 5 were measured under room temperature conditions according to the tensile test method of ASTM D882, and the results are summarized in Table 1 below.

<Experimental Example>

If a passivation layer is not formed on the surface of a lithium transfer film, there is a characteristic in that a nitridation reaction occurs in a nitrogen environment atmosphere (a controlled environment where oxygen and moisture < 10 ppm) and the surface is rapidly nitrified. Thus, this phenomenon was used to check if the passivation layer on the surface of the lithium transfer film was damaged.

In a chamber, two shafts were configured, and tension was applicable to the shafts so as to enable unwinding/rewinding of a film roll. Lithium transfer films of Example 1, 2 and Comparative Examples 1 to 5, which were prepared according to the above production example, were placed on the shafts inside the chamber, and then the inside of the chamber was purged with nitrogen for 30 min. Thereafter, the inside of the chamber was circulated for 30 min with a purifier. When the oxygen and moisture concentration reached 10ppm or less, a tension of 10 N and 30 N was applied to each lithium transfer film. After 10 min, whether the surface of the lithium metal layer was nitrified was observed and is noted in Table 1 below. 'X' indicates that no nitridation reaction occurred, and 'O' indicates that a nitridation reaction occurred. When a nitridation reaction occurs, the surface of the lithium metal layer turns black, so whether the nitridation reaction has occurred can be observed with naked eyes.

[Table 1]

| | | Exam . 1 (PET A) | Exam . 2 (PEN) | Comp Exam . 1 (PET B) | Comp Exam . 2 (PET C) | Comp · Exam . 3 (PET D) | Comp Exam . 4 (PET E) | Comp Exam . 5 (PET F) |
|---|---|---|---|---|---|---|---|---|
| Elongation (%) | MD | 122. 5 | 90.2 | 139. 7 | 126. 0 | 133. 8 | 121. 0 | 107. 8 |
| | TD | 119. 2 | 85.5 | 140. 5 | 137. 1 | 136. 7 | 148. 0 | 129. 8 |
| Elongation Deviation | | 1.7 | 2.4 | 0.4 | 5.6 | 1.45 | 13.5 | 11.0 |
| Young's Modulus (Gpa) | MD | 4.68 | 5.21 | 4.30 | 4.42 | 3.91 | 4.74 | 4.56 |
| | TD | 5.16 | 5.64 | 4.70 | 4.72 | 4.19 | 4.55 | 4.19 |
| Nitridatio n Reaction according to magnitude of tension | 10 N | X | X | X | X | O | O | X |
| | 30 N | X | X | O | O | O | O | O |

As can be seen from Table 1 above, the lithium transfer film of Comparative Example 1 did not satisfy characteristic mechanical properties of the present disclosure as the elongation of the base layer in each of the MD and TD was 130% or more. Thus, it can be found that the passivation layer was damaged under the high-tension condition of 30 N during roll-to-roll processing, and a nitridation reaction occurred on the lithium surface.

Likewise, the lithium transfer film of Comparative Example 2 did not have characteristic mechanical properties of the present disclosure as the TD elongation of the base layer was 130% or more and the elongation deviation in the MD and TD was greater than ±3.5. Thus, it can be found that a nitridation reaction occurred on the lithium surface under the high-tension condition of 30 N.

In Comparative Example 3, since the elongation and Young's Modulus in the MD and TD of the present application were not satisfied, a nitridation reaction was observed even under a relatively low-tension condition of 10 N. Comparative Example 4 is similar to Comparative Example 2, whereas the elongation deviation was greatly increased. Then, the passivation layer was damaged even under a low-tension condition of 10N and a nitridation reaction was observed.

In Comparative Example 5, the ranges of the elongation and Young's Modulus were satisfied, but a nitridation reaction was observed under a tension condition of 30 N due to a small Young's Modulus in TD, and an unsatisfactory deviation.

However, the base layers used in Examples 1 and 2 of the present application satisfy all conditions, that is, the Young's Modulus in each of the MD and TD is 4.2GPa or more, the elongation in each of the MD and TD is 130% or less, and the elongation deviation in the MD and TD is ±3.5 or less. Therefore, regardless of the magnitude of tension, the lithium transfer film is not easily stretched by tension application. Also, since the strain is small along any one of the MD axis and the TD axis, damage to the passivation layer may be suppressed or prevented during the roll-to-roll lithium transfer process, and nitriding or oxidation of the lithium surface can be prevented.

In the above description, since various substitutions, modifications, and changes may be made to the present disclosure by one of ordinary skilled in the art within the scope that does not depart from the technical idea of the present disclosure, the present disclosure is not limited by the foregoing embodiments and the drawings attached herewith, but all or some of the embodiments may be selectively combined to implement various modifications. Therefore, the technical scope of the present disclosure is not limited to the descriptions therein, but should be defined from the claims.

[Explanation of Reference Numerals and Symbols]

> 10: Negative electrode current collector layer
> 20: Negative electrode active material layer
> 30: Separator
> 40: Positive electrode active material layer
> 50: Positive electrode current collector layer
> 60: Lithium transfer film
> 61: Base layer
> 62: Release layer
> 63: Lithium metal layer
> 64: Passivation layer
> 100: Negative electrode for lithium secondary battery
> 200: Positive electrode for lithium secondary battery

**Claims**

1. A lithium transfer film comprising:

   a base layer; a lithium metal layer; and a passivation layer,
   wherein in the base layer, a Young's Modulus in each of a machine direction (MD) and a transverse direction (TD) is 4.2GPa or more, an elongation in each of the MD and TD is 130% or less, and an elongation deviation in the MD and TD is ±3.5 or less.

2. The lithium transfer film according to claim 1, wherein the passivation layer contains at least one of $Li_2CO_3$ and $Li_2O$.

3. The lithium transfer film according to claim 1, wherein a thickness of the lithium metal layer is 1 μm to 10 μm.

4. The lithium transfer film according to claim 1, wherein a thickness of the passivation layer is 5 nm to 200 nm.

5. The lithium transfer film according to claim 1, further comprising a release layer between the base layer and the lithium metal layer.

6. A method of manufacturing a lithium transfer film, the method comprising:

    depositing a lithium metal layer on one surface of a base layer; and
    forming a passivation layer on a surface of the lithium metal layer opposite to a surface where the base layer is located,
    wherein in the base layer, a Young's Modulus in each of a MD and a TD is 4.2GPa or more, an elongation in each of the MD and TD is 130% or less, and an elongation deviation in the MD and TD is $\pm3.5$ or less.

7. The method according to claim 6, wherein the forming of the passivation layer includes:

    placing the base layer on which the lithium metal layer is deposited, in a vacuum chamber;
    injecting Ar gas and $CO_2$ gas into the vacuum chamber; and
    forming the passivation layer on the surface of the lithium metal layer opposite to the surface in contact with the base layer.

8. The method according to claim 6, wherein the depositing of the lithium metal layer is performed after forming a release layer on one surface of the base layer.

9. An electrode intermediate in which an electrode current collector layer; an electrode active material layer; and the lithium transfer film according to any one of claims 1 to 5 are sequentially stacked,
wherein the passivation layer of the lithium transfer film faces the electrode active material layer.

10. An electrode intermediate in which an electrode current collector layer; and the lithium transfer film according to any one of claims 1 to 5 are sequentially stacked,
wherein the passivation layer of the lithium transfer film faces the electrode current collector layer.

11. An electrode for a lithium secondary battery, the electrode comprising:

    an electrode active material layer or an electrode current collector layer,
    wherein the lithium transfer film according to one of claims 1 to 5 is transferred to at least one surface of the electrode active material layer or the electrode current collector layer.

12. The electrode according to claim 11, wherein the electrode active material layer includes a silicon-based active material, and the silicon-based active material includes at least one selected from a group including Si, SiOx (0<x<2), Si/C, and Si alloys.

13. The electrode according to claim 11, wherein the electrode active material layer includes a negative electrode conductive material, and the negative electrode conductive material includes at least one selected from a group including plate-shaped graphite, single-walled carbon nanotubes (SWCNTs) and multi-walled carbon nanotubes (MWCNTs).

14. A lithium secondary battery comprising:

    the electrode for the lithium secondary battery according to claim 11;
    a separator; and
    an electrolyte.

15. A battery module comprising the lithium secondary battery according to claim 14.

16. A battery pack comprising the lithium secondary battery according to claim 14.

17. A battery pack comprising the battery module according to claim 15.

[Figure 1]

| 64 |
| --- |
| 63 |
| 62 |
| 61 |

} 60

[Figure 2]

```
        ┌─────────────┐
        │    START    │
        └─────────────┘
               │
               ▼
  ┌────────────────────────────────┐
  │ FORMING RELEASE LAYER ON ONE   │ ～S10
  │    SURFACE OF BASE LAYER       │
  └────────────────────────────────┘
               │
               ▼
  ┌────────────────────────────────┐
  │ FORMING LITHIUM METAL LAYER ON │ ～S20
  │ ONE SURFACE OF THE RELEASE     │
  │         LAYER                  │
  └────────────────────────────────┘
               │
               ▼
  ┌────────────────────────────────┐
  │ FORMING PASSIVATION LAYER ON   │ ～S30
  │ ONE SURFACE OF LITHIUM METAL   │
  │         LAYER                  │
  └────────────────────────────────┘
               │
               ▼
        ┌─────────────┐
        │     END     │
        └─────────────┘
```

[Figure 3]

| 20 | ⎫ |
|----|---|
| 10 | ⎭ 100 |

[Figure 4]

| 10 | ⎫ |
|----|---|
| 20 | ⎬ 100 |
| 30 | ⎭ |
| 40 | ⎫ 200 |
| 50 | ⎭ |

## INTERNATIONAL SEARCH REPORT

| International application No. |
| --- |
| **PCT/KR2024/096664** |

| **A.** | **CLASSIFICATION OF SUBJECT MATTER** |
| --- | --- |

**H01M 4/139**(2010.01)i; **H01M 4/04**(2006.01)i; **H01M 10/052**(2010.01)i; **B32B 7/025**(2019.01)i; **B32B 7/06**(2006.01)i; **H01B 5/14**(2006.01)i

According to International Patent Classification (IPC) or to both national classification and IPC

| **B.** | **FIELDS SEARCHED** |
| --- | --- |

Minimum documentation searched (classification system followed by classification symbols)

H01M 4/139(2010.01); H01M 10/052(2010.01); H01M 10/0525(2010.01); H01M 10/42(2006.01); H01M 4/13(2010.01); H01M 4/134(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기재층(substrate layer), 리튬 금속층(lithium metal layer), 패시베이션층(passivatio n layer), 리튬 전사(lithium transfer)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | KR 10-2021-0029459 A (LG CHEM, LTD.) 16 March 2021 (2021-03-16)<br>See claim 1; and example 1. | 1-17 |
| A | KR 10-2148507 B1 (LG CHEM, LTD.) 26 August 2020 (2020-08-26)<br>See claims 1, 2 and 4-10. | 1-17 |
| A | KR 10-2023-0120254 A (LG ENERGY SOLUTION, LTD.) 17 August 2023 (2023-08-17)<br>See claims 1-12. | 1-17 |
| A | KR 10-2020-0000112 A (LG CHEM, LTD.) 02 January 2020 (2020-01-02)<br>See claims 1-13. | 1-17 |
| A | KR 10-2016-0037610 A (LG CHEM, LTD.) 06 April 2016 (2016-04-06)<br>See claims 1-15. | 1-17 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 March 2025** | **31 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 693 454 A1**

**INTERNATIONAL SEARCH REPORT**
**Information on patent family members**

International application No.

**PCT/KR2024/096664**

| Patent document cited in search report | | | Publication date (day/month/year) | Patent family member(s) | | | Publication date (day/month/year) |
|---|---|---|---|---|---|---|---|
| KR | 10-2021-0029459 | A | 16 March 2021 | CN | 113826237 | A | 21 December 2021 |
| | | | | CN | 113826237 | B | 14 June 2024 |
| | | | | EP | 3961764 | A1 | 02 March 2022 |
| | | | | EP | 3961764 | A4 | 03 August 2022 |
| | | | | KR | 10-2658723 | B1 | 19 April 2024 |
| | | | | US | 2022-0223847 | A1 | 14 July 2022 |
| | | | | WO | 2021-045431 | A1 | 11 March 2021 |
| KR | 10-2148507 | B1 | 26 August 2020 | CN | 110249461 | A | 17 September 2019 |
| | | | | CN | 110249461 | B | 10 June 2022 |
| | | | | EP | 3547416 | A1 | 02 October 2019 |
| | | | | EP | 3547416 | A4 | 12 February 2020 |
| | | | | JP | 2020-501322 | A | 16 January 2020 |
| | | | | JP | 7037017 | B2 | 16 March 2022 |
| | | | | KR | 10-2019-0011881 | A | 08 February 2019 |
| | | | | US | 11444273 | B2 | 13 September 2022 |
| | | | | US | 2019-0372101 | A1 | 05 December 2019 |
| | | | | WO | 2019-022403 | A1 | 31 January 2019 |
| KR | 10-2023-0120254 | A | 17 August 2023 | CN | 117897825 | A | 16 April 2024 |
| | | | | EP | 4379842 | A1 | 05 June 2024 |
| | | | | JP | 2024-531162 | A | 29 August 2024 |
| | | | | US | 2024-0266494 | A1 | 08 August 2024 |
| | | | | WO | 2023-153716 | A1 | 17 August 2023 |
| KR | 10-2020-0000112 | A | 02 January 2020 | KR | 10-2543245 | B1 | 14 June 2023 |
| KR | 10-2016-0037610 | A | 06 April 2016 | KR | 10-1771292 | B1 | 24 August 2017 |

Form PCT/ISA/210 (patent family annex) (July 2022)

**EP 4 693 454 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230183303
- KR 1020240182140
- KR 102475886